# EUROPEAN PATENT APPLICATION

(11) **EP 1 134 989 A1**
(43) Date of publication of application: **19.09.2001**
(21) Application number: 00966172.9
(22) Date of filing: 29.09.2000
(51) Int. Cl.: H04N 17/00, G01R 23/16

(54) **DIGITAL AND/OR ANALOGIC TELEVISION CARRIER SIGNALS AND DEVICE FOR MEASURING AND PROCESSING DIGITAL AND/OR ANALOGIC TELEVISION CARRIER SIGNALS**

(30) Priority: 04.10.1999 ES 9902178
(71) Applicant: Promax Electronica, S.A., 08907 Hospitalet de Llobregat (ES)
(72) Inventor: POUS GREBOL, Roberto, E-08907 Hospitalet de Llobregat (ES)
(74) Representative: Morgades Manonelles, Juan Antonio
(86) International application number: ES0000366
(87) International publication number: WO0126387

(57) **Abstract**

The system automatically identifies, in the channel that the device is tuning, whether a carrier of digital or analogical television is being transmitted with the steps of tuning (2) the frequency; calculation (3) of the level measured at said frequency; comparison (4) of the level with preset minimum values; variation (6) of the frequency; calculation (7) of the level measured to said frequency; comparison (8) of the average result obtained at the original frequency, identification (10) of the signal as a digital or analogical carrier depending upon whether the obtained result is similar to or different from the level measured at the original frequency. The device carries out certain automatic tunes to determine whether the carrier is digital or analogical and includes an output unit (12) that outputs the result of the identification.

## Description

The present patent application relates, as stated in its title, to a "SYSTEM FOR IDENTIFYING DIGITAL AND/OR ANALOGICAL TELEVISION CARRIER SIGNALS AND DEVICE FOR MEASURING AND PROCESSING DIGITAL AND/OR ANALOGICAL TELEVISION CARRIER SIGNALS" which novel manufacturing, conformation and design features fulfil the purpose to which they have been specifically conceived, with a maximum safety and effectiveness.

The new digital television broadcasting systems have involved a wide growth of digital carriers in the radio broadcasting bands of television channels.

The presently known devices used for signal measurement and analysis can be properly configured to measure signals both of analogical and digital nature. The necessary procedures for measuring digital carriers are different from those required for measuring analogical carriers. For this reason, one of the main disadvantages of such carrier measuring and/or processing devices is that the user or the operator should know beforehand the carrier type that is being received by such device.

Therefore the main object of the present invention is to provide a system for identification of digital and/or analogical television carrier signals which is able to automatically recognize the type of signal that is being received.

Another object of the present invention is to provide a device for measuring and processing digital and/or analogical television carrier signals apt to operate with the above mentioned identification system.

The system of the present invention is part of a radio frequency signal carrier measuring and/or analysis device and it is characterized in that it is suitable to automatically identify whether the channel that is being tuned by the device is transmitting a digital or analogical television carrier or otherwise it is an empty channel.

Identification of the carrier comprises the following steps:
i) tuning (2) of the frequency assigned to the video carrier of the selected channel;
ii) calculation (3) of the level measured in this frequency;
iii) comparison (4) of this level with preset minimum values;
iv) changing (6) of the tuning frequency into frequency value or values within the channel which do not match with none of the carriers of the analogical television signals but they are within the bandwidth taken up with a digital television carrier in the case said level is higher than the above mentioned preset minimum values;
v) calculation (7) of said level measured to said frequencies;
vi) comparison (8) of the average result obtained in this frequencies with the level measured at the original frequency,
vii) identification (9) of the signal as an analogical carrier in the case said obtained result is different from the level obtained regarding said original frequency,
viii) identification (10) of the signal as a digital carrier in the case said obtained result is substantially similar to the level measured at said original frequency.

The system of the invention, as it has been described, allows to automatically recognize if the signal that is being received is a digital or an analogical carrier. This feature is notably advantageous for the purposes of the present invention as the user does not have to recognize the type of carrier that is present in a certain channel and therefore the signal processing, whether it be analogical or digital, is carried out in a more effective way than with the known devices used so far for the same purpose.

Furthermore, according with the obtained identification of the received carrier, the system is able of automatically reconfigure the device measuring values to carry out the measurement of the identified carrier.

As it has been previously disclosed, the invention also refers to a device for measuring and processing digital and/or analogical television carrier signals. The device according to the invention comprises a circuitry controlled by a microcontroller or microprocessor suitable to carry out certain automatic tunes within the channel assigned to the carrier with the purpose of determining whether the carrier present in said frequency is digital or analogical; and a visual or acoustics output unit that outputs the user the result of the identification. Said output unit is also suitable to output a signal when an operative result cannot be obtained.

Such a measuring device is able to recognize the signal to accurately measure the level or power of the carrier making the task of the installer easier and allowing a quicker and more effective analysis as described before.

The identification system of the present invention is based on the basic feature that distinguishes a carrier with digital contents from a carrier with analogical contents. In digital carriers, the transmitted energy is distributed homogeneously in the whole channel bandwidth. On the other hand, in a carrier having analogical contents most of the energy is located at certain frequencies.

The measurement of a digital carrier with a tuned receiver or a spectra analyser with a certain bandwidth is equivalent, without the appropriate decoder, to the measurement of white noise in the whole measuring width. The system of the present invention is able to distinguish that the device is receiving "white noise" at a certain level above the measuring threshold within the channel bandwidth.

Further details and features of the system for identification of digital and/or analogical television carrier signals as well as the device for measuring and processing digital and/or analogical television carrier signals of the present invention will be apparent from the following description, which refers to the accompanying drawings that schematically represent the preferred details. These details are given by way of example, which refer to a possible case of practical embodiment, but it is not limited to the disclosed details; therefore this description must be considered from an illustrating point of view and without any type of limitations.

Fig. 1 is a block diagram, which diagrammatically shows the steps defining a system for automatically identifying digital television carrier signals according to the present invention.

Fig. 2 is a graph showing the voltage of a digital television carrier relative to the broadcasting frequency.

Fig. 3 is a graph of the voltage of a modulated analogical television AM-VSB carrier relative to the broadcasting frequency.

Fig. 4 is a graph of the voltage of a FM modulated analogical television carrier.

And figs. 5 and 6 show a displaying unit of a measuring device according to the invention, which displays the user the identification of an analogical and digital carrier, respectively.

The steps defining an identification system according to the present invention are: (1) configuration of a specific channelling system, (2) tuning the signal at the frequency of the analogical video carrier, (3) calculation of the level measured at the frequency of the analogical video carrier, (4) comparison of said level with preset minimum values, (5) indication that there is no processable signal in case this level does not exceed the threshold according to said minimum values, (6) increasing the frequency in case said level is higher than the established threshold, (7) calculation of the level measured at said increased frequency, (8) comparison of the result obtained in the step (7) with the level measured at the frequency of the step (3), (9) identification of the signal as an analogical carrier or (10) identification of the signal as a digital carrier depending on whether the measured level remains sufficiently constant within a specific range of frequencies.

An example of determination of the nature of the received signals in a measuring device according to the identification system of the invention is now described.

The identification system that is given herein by way of an example corresponds to a system for identification of DVB-T digital television carriers transmitted within the UHF band and using channels assigned to this band according to the channel planning in the CCIR system. In said system, the digital television channels take up substantially the whole bandwidth assigned to each channel (8MHz).

The system according to the present invention comprises a sequence of operations starting from the configuration (1) of a specific channelling system from which the channel distribution within the bands through which transmission is carried out is known. In other words, the analogical video carrier frequency is tuned as if the measuring device expects to find in that point an analogical video carrier.

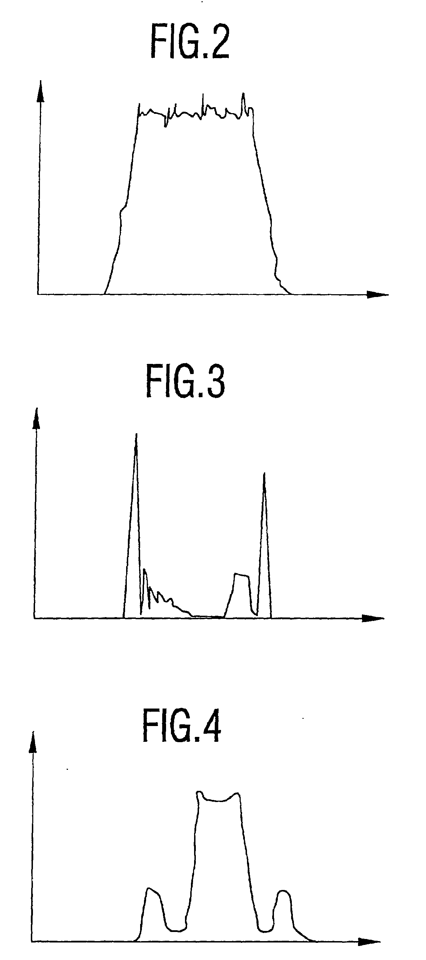

Subsequent step is reception or tuning (2) at the analogical video carrier frequency, that is to say, the measuring device is ready to receive an analogical television signal. The following step consists in analysing the received power according to the possible cases represented in the graphs of figs. 2, 3 and 4. Said analysis is based on the basic feature that distinguishes a carrier with digital contents (DVB-T digital television carrier) from a carrier with analogical content (VSB-AM modulated carrier). The transmitted energy is distributed homogeneously in the digital carriers in the whole channel bandwidth as it can be seen from fig. n° 2. On the other hand, in a carrier having analogical contents (see fig. 3 and 4), most of the energy is located at specific frequencies. In the case of AM-VSB modulated analogical television carrier spectrum, the energy is located at the ends of the bandwidth (see fig. 3). In the case of FM modulated analogical television carrier spectrum (fig. 4) the energy is irregularly confined at the central area of the bandwidth.

In this sense, the fact should be stressed that in a terrestrial broadcasting of an analogical television signal, most of the energy that is transmitted is located at the frequency of video, chroma and audio carrier. While there exists a difference between the spectra shown in figs. 3 and 4, in an analogical television signal transmitted via satellite, which uses FM modulation (see fig. 4), although the energy transmitted is not located at specific discreet frequencies as in an analogical terrestrial radio-broadcasting signal, which uses AM-VSB modulation (see fig. 3), it is also possible to distinguish it from a digital signal by the device of the present invention, since the energy is not transmitted homogeneously in the whole bandwidth. 90% of the transmitted energy is frequently located at less than the fourth part of the total bandwidth.

In short, with this step of the system it is possible to recognize the way that the energy of the carrier is distributed in the band of frequencies taken up by the channel. A device operating with the disclosed identification system is thus able to recognize whether the received signal is of digital or analogical nature.

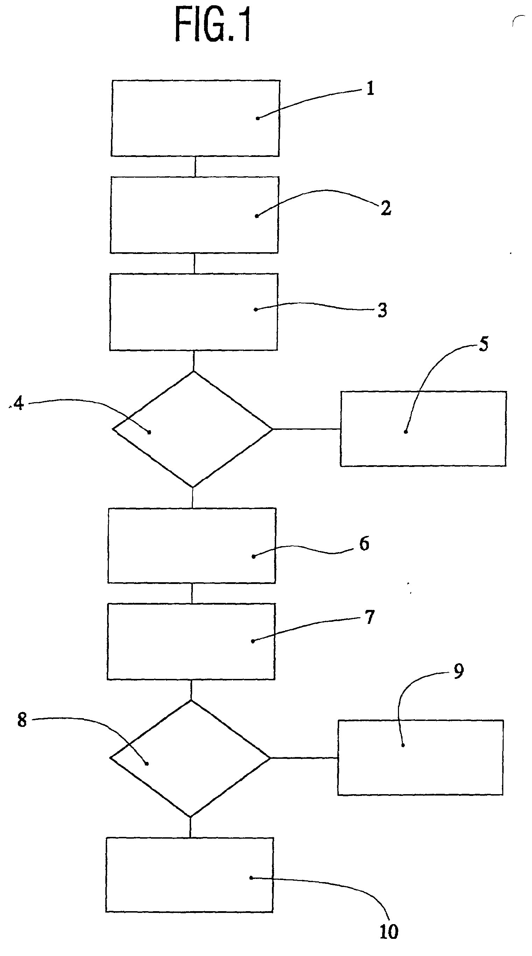

Said step of analysing the received power comprises the calculation (3) of the level measured at the frequency of the analogical video carrier and the comparison (4) of this level with preset minimum values. In this step, if said level is smaller than said preset minimum values for the measuring device, then said device does not process any signal. This case has been illustrated in fig. 1 by the reference numeral (5). On the other hand, if said level measured at the frequency of the analogical video carrier is higher than said preset minimum values frequency step (6) is then carried out (for example about 1 MHz).

Subsequent step is designated by reference numeral (7) in said fig. 1, where said measured level is calculated at said increased frequency. Subsequently, and analogously to the above described step (4), a step (8) is carried out consisting in comparing the result obtained in step (7) with the level measured at the frequency of step (3).

In said step (8), if the result obtained in step (7) is not substantially similar to the level measured at said original frequency [step (3)] then step (9) is carried out where signal is identified as an analogical carrier, whilst if the result obtained in step (7) is approximately similar to the level measured at said original frequency [step (3)] step (10) is then carried out, where the signal is identified as a digital carrier.

The step of analysing the received power can be thus summarized in the determination of whether the measured level remains sufficiently constant within a specific range of frequencies. Said range is a function of the analysed transmission system (terrestrial radio-broadcasting, CATV, SMATV, etc.), the used band of frequencies, the transmission means, the channel distribution in the band, the used modulation as well as the measuring device itself.

The described identification system allows to automatically recognize whether the signal that is being received is a digital or an analogical carrier and, consequently, a measuring device operating according to this identification system will be able to recognize the type of signal that it is receiving in order to proceed to accurately measure the level or power of the carrier, thus making the task of the installer easier and allowing a quicker and more effective analysis.

Therefore, in the signal measuring process, if the signal is an analogical carrier, the device will measure its power using detectors and appropriate filters. Instead, if the device operating according with the system of the present invention determines that the carrier is of digital nature, it will automatically commute to mean value detectors and it will measure the total power transmitted within the tuned channel.

As it has been exposed, it is enough to tune a channel of any type from those present in the transmission system so that the measuring device automatically identifies the type of carrier that is being received at a given time.

The measuring device includes means to determine signal level, the field strength, spectrum analyser, etc. Measures can be obtained in a television carrier receiving circuit at the UHF super-heterodyne band.

A device operating according to the identification system of the present invention comprises a circuitry controlled by a microcontroller or microprocessor suitable to carry out certain tunes within the channel assigned to the carrier with the purpose of determining whether the carrier present in said frequency is digital or analogical.

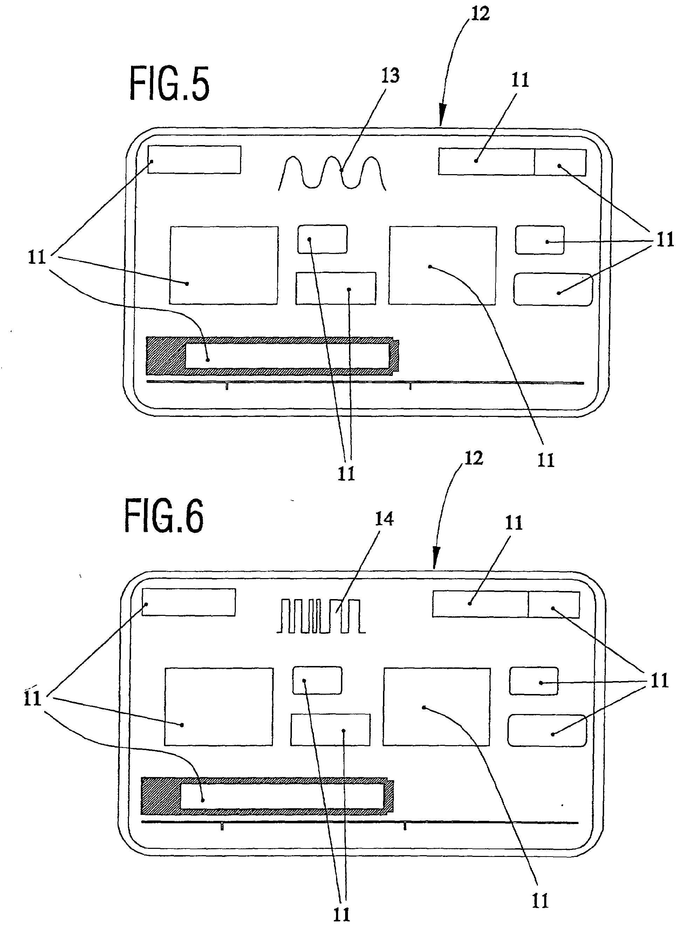

Said device also includes a visual or acoustics output unit. In figs. 5 and 6 a preferred embodiment of such output unit has been diagrammatically represented.

The output units include a number of icons (11) informing the user about instructions and values of the signal process. More specifically, the output unit (12) shown in fig. 5 includes an icon (13) informing the user that a carrier of analogical nature has been identified. The output unit (12) includes another icon (14), as it can be seen from fig. 6, to notice the user that a digital carrier has been detected.

One of the icons (11) can also inform the user that no signal has been detected, as specified in step (5) previously described referring to fig.1 of the drawings. The fact of not having detected signal can be due to some limitations during the measuring process which can cause an operative result not being obtained, for example if the carrier level does not reach certain preset threshold. Said threshold can be established from experimental values and from the sensitivity of the measuring device itself.

Although the described identification system is intended to identification of DVB-T digital television carriers transmitted within the UHF band and using channels assigned in such band according to the channel planning in the CCIR system, the identification system of the present invention allows identifying CATV and DVB carriers.

Once having been sufficiently described what the present patent application consists in accordance to the enclosed drawings, it is understood that any detail modification can be introduced as appropriate, provided that variations may alter the essence of the invention as summarised in the appended claims.

## Claims

1. "SYSTEM FOR IDENTIFYING DIGITAL AND/OR ANALOGICAL TELEVISION CARRIER SIGNALS" as being part of a device for measuring and/or analysing radio frequency carrier signals, **characterized in that** said system is suitable to automatically identify, in the channel that the device is tuning, whether a carrier of digital or analogical television is being transmitted, or otherwise it is an empty channel.

2. "SYSTEM FOR IDENTIFYING DIGITAL AND/OR ANALOGICAL TELEVISION CARRIER SIGNALS" according to claim 1, **characterized in that** said carrier identification comprises the steps of tuning (2) the frequency assigned to the video carrier in the selected channel; calculation (3) of the level measured at this frequency; comparison (4) of said level with preset minimum values; variation (6) of the tuning frequency to a frequency value or values within the channel that do not match with none of the carriers of the analogical television signals but they are within the bandwidth taken up with a digital television carrier in the case said level is higher than the above mentioned preset minimum values; calculation (7) of said level measured to said frequencies; comparison (8) of the average result obtained in this frequencies with the level measured to the original frequency, identification (10) of the signal as a digital carrier in the case said obtained result is substantially similar to the level measured at said original frequency and identification (9) of the signal as an analogical carrier in the case said obtained result is different from the level obtained regarding said original frequency.

3. "SYSTEM FOR IDENTIFYING DIGITAL AND/OR ANALOGICAL TELEVISION CARRIER SIGNALS" according to the any of the preceding claims **characterized in that**, according to the obtained identification of the received carrier, the system is able of automatically reconfigure the device measuring parameters to carry out the measurement of the identified carrier.

4. "DEVICE FOR MEASURING AND PROCESSING DIGITAL AND/OR ANALOGICAL TELEVISION CARRIER SIGNALS" according to the system of the preceding claims, **characterized in that** it comprises a circuitry controlled by a microcontroller or microprocessor suitable to carry out certain automatic tunes within the channel assigned to the carrier with the purpose of determining whether the carrier present in said frequency is digital or analogical; and a visual or acoustics output unit that outputs the user the result of the identification.

5. "DEVICE FOR MEASURING AND PROCESSING DIGITAL AND/OR ANALOGICAL TELEVISION CARRIER SIGNALS according to claim 4, **characterized in that** said output unit (12) is also suitable to output a signal when an operative result cannot be obtained.
